# EUROPEAN PATENT APPLICATION

(11) **EP 1 916 158 A1**
(43) Date of publication of application: **30.04.2008**
(21) Application number: 06833557.9
(22) Date of filing: 29.11.2006
(51) Int. Cl.: B60R 16/033, B60R 16/04

(54) **AUXILIARY POWER SUPPLY DEVICE FOR VEHICLE, POWER SUPPLY DEVICE FOR VEHICLE, HAVING THE AUXILIARY POWER SUPPLY DEVICE, AND AUTOMOBILE**

(30) Priority: 01.12.2005 JP 2005347625
(71) Applicant: MATSUSHITA ELECTRIC INDUSTRIAL CO., LTD., Osaka 571-8501 (JP)
(72) Inventor: NAKAJIMA, Norio c/o Matsushita Electric Industrial Co., Ltd., Chu-ku, Osaka-shi, Osaka, 540-6207 (JP); NISHIMOTO, Susumu c/o Matsushita Electric Industrial Co., Ltd., Xhuo-ku, Osaka-shi, Osaka, 540-6207 (JP)
(74) Representative: Pautex Schneider, Nicole Véronique
(86) International application number: PCT/JP2006/323753
(87) International publication number: WO 2007/063865

(57) **Abstract**

An auxiliary power supply device for vehicle includes a capacitor unit, a temperature detector, and a charge controller. The capacitor unit includes at least one electric double layer capacitor. The temperature detector detects temperature in vicinity of the capacitor unit. The charge controller controls charging voltage of the capacitor unit based on a detection result of the temperature detector.

## Description

### TECHNICAL FIELD

The present invention relates to an auxiliary power supply device for vehicle for electrically controlling the vehicle, and a power supply device for vehicle using the auxiliary power supply device.

### BACKGROUND ART

Developments related to vehicle braking are increasingly adopting electrical braking in preference to conventional mechanical braking. Some vehicles carry a battery as a power source for electrical braking. However, if the battery is the only source of power, the vehicle becomes uncontrollable if a fault prevents power in the battery from being supplied. Therefore, Patent Document 1, for example, proposes the installation of a capacitor unit employing capacitors as an auxiliary power supply device in addition to the battery to enable response to emergencies. An electric double layer capacitor which has a large capacitance is preferably used as such a capacitor.

If capacitors are employed as the auxiliary power source, the service life of the capacitors is extremely difficult to predict. The capacitors thus need to be replaced at short intervals. To further ensure safety, Patent Document 2 proposes an auxiliary power supply device that allows prediction and detection of the service life thereof.

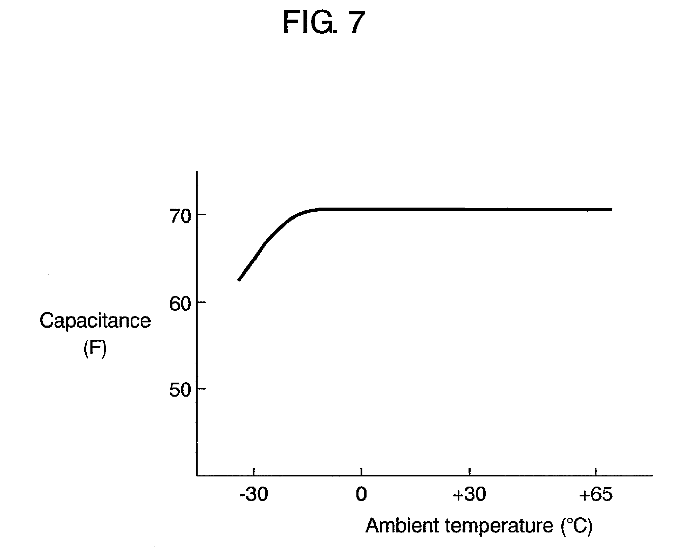

However, the capacitance of the electric double layer capacitor used as the auxiliary power source is decreased at low temperatures. Fig. 7 shows the temperature characteristics related to capacitance of this electric double layer capacitor. The capacitance is measured in the following way. First, the electric double layer capacitor is inserted into a thermostatic chamber set at a predetermined temperature, and connected to an external charger. When the electric double layer capacitor reaches the set temperature, the capacitor is charged at a constant current until its voltage reaches the withstand voltage, 2.35 V. The capacitor is then placed at room temperature and discharged at a constant current. The change in voltage per unit time during discharge is read, and the capacitance is calculated using formula CV = IT. Here, C is the capacitance, V is the voltage change, I is current, and T is unit time. This measurement is conducted at each set temperature.

It is apparent from Fig. 7 that the capacitance is smaller by about 10% at -30 °C, compared to above 0 °C. This happens because the internal resistance increases due to a drop in the conductivity of the electrolyte. Thus, to provide the necessary capacitance within the temperature range of -30°C to 65 °C required for vehicle use, an electric double layer capacitor with a substantially larger rated capacitance than a guaranteed capacitance needs to be employed. For example, even if the nominal rated capacitance of the electric double layer capacitor is 70 F, the capacitance at -30°C falls to 63 F, and thus only a capacitance of 63 F can be assured. Therefore, an electric double layer capacitor with a capacitance of 78F, for example, needs to be employed.

On the other hand, with particular respect to energy conservation, a smaller and lighter capacitor unit is strongly demanded. However, there is a limit to the reduction of the size and weight of a capacitor unit achievable by modifying its structure in order to maintain the capacitance of the electric double layer capacitors employed in the capacitor unit.
Patent Document 1: Japanese Patent Unexamined Publication No. H5-116571
Patent Document 2: Japanese Patent Unexamined Publication No. 2004-322987

### SUMMARY OF THE INVENTION

The present invention offers a smaller and lighter auxiliary power supply device for vehicle and a power supply device for vehicle which do not permit a reduction in capacitance. The auxiliary power supply device for vehicle of the present invention includes a capacitor unit, a temperature detector, and a charge controller. The capacitor unit includes at least one electric double layer capacitor. The temperature detector detects the temperature in vicinity of the capacitor unit. The charge controller controls the charging voltage of the capacitor unit based on a detection result of the temperature detector. The power supply device for vehicle of the present invention includes the auxiliary power supply device for vehicle, a battery, a first abnormality detector, and an output controller. The battery is connected to the auxiliary power supply device for vehicle. The first abnormality detector detects any abnormal in the voltage of the battery. The output controller outputs power from the battery when the battery is in a normal state, and outputs power from the capacitor unit if there is any abnormality in the battery.

As described above, the auxiliary power supply device for vehicle and the power supply device for vehicle of the present invention include the capacitor unit configured with an electric double layer capacitor. Although the electric double layer capacitor has reduced capacitance at lower temperatures, its withstand voltage increases. In addition, the voltage generated in the vehicle increases at low temperatures due to a smaller loss. By effectively using these two characteristics to the maximum, the applied voltage for charging the electric double layer capacitor is increased when a vehicle is at low temperatures so that an electric charge same as that at temperatures above low temperatures can be used. The electric charge amount at low temperatures can thus be increased even if the electric double layer capacitor with a small capacitance is employed. Accordingly, a reliable amount of energy is assured even the temperature changes.

### BRIEF DESCRIPTION OF DRAWINGS

Fig. 1 is a schematic view of a configuration of an automobile in accordance with a preferred embodiment of the present invention.
Fig. 2 is a schematic view of a braking system of the automobile in Fig. 1.
Fig. 3 is a circuit diagram of a power supply device for vehicle in accordance with the preferred embodiment.
Fig. 4 is a circuit diagram of a charge circuit in the power supply device for vehicle in Fig. 3.
Fig. 5 is a chart illustrating temperature characteristics related to voltage of a power generator for automobile.
Fig. 6 is a chart illustrating withstand voltage characteristics of an electric double layer capacitor.
Fig. 7 is a chart illustrating temperature characteristics related to a capacitance of the electric double layer capacitor.

### REFERENCE MARKS IN THE DRAWINGS

- 1: Battery
- 2: Auxiliary power supply device
- 3: Electronic controller (main controller)
- 4: Brake
- 5: Charge controller
- 6: Temperature detector
- 7: Switch (charging voltage controller)
- 8: Ignition switch
- 9: Ignition generator terminal (IG terminal)
- 10: +BC terminal
- 11: Communication input terminal
- 12: Communication output terminal
- 13: Output terminal
- 14: Microcomputer
- 15: Capacitor unit
- 16: Charge circuit
- 17: Discharge circuit
- 18: Backup detector (First abnormality detector)
- 19: FET switch (output controller)
- 20: Power supply terminal
- 21: Second abnormality detector
- 22: IC (constant voltage control circuit)
- 23: Transistor
- 24: FET
- 25: Constant current control circuit
- 33: Brake pedal
- 35A: Front wheel
- 35B: Rear wheel
- 36: Engine
- 37: On-vehicle power generator (power generator)
- 38: Engine compartment
- 39: Steering wheel
- 40: Body

### DETAILED DESCRIPTION OF PREFERRED EMBODIMENTS

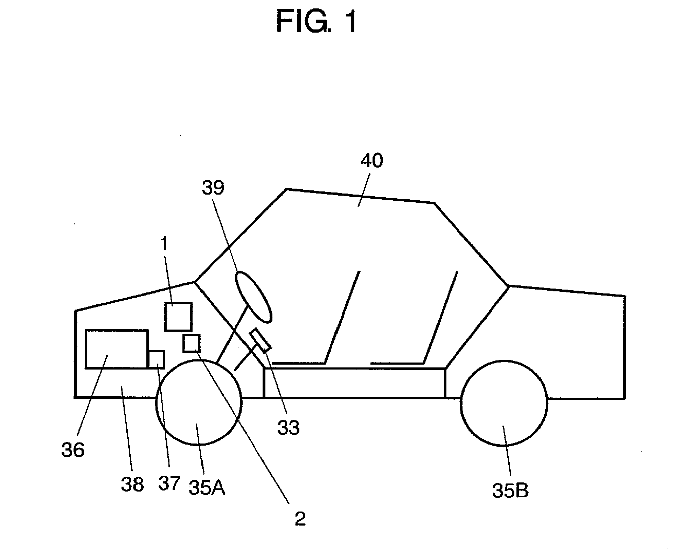

Fig. 1 is a schematic view of an automobile (a vehicle) in a preferred embodiment of the present invention. Engine 36 drives rear wheels 35B which are drive wheels, and also drives on-vehicle power generator (hereafter referred to as "generator") 37. Front wheels 35A as operated wheels are operated by steering wheel 39 provided inside vehicle body 40. Front wheels 35A and rear wheels 35B support body 40. Front wheels 35A can also be chosen as drive wheels. Generator 37 charges battery 1 and auxiliary power supply device 2. In general, battery 1, auxiliary power supply device 2, engine 36, and generator 37 are disposed in engine compartment 38. Brake pedal 33 is provided inside body 40.

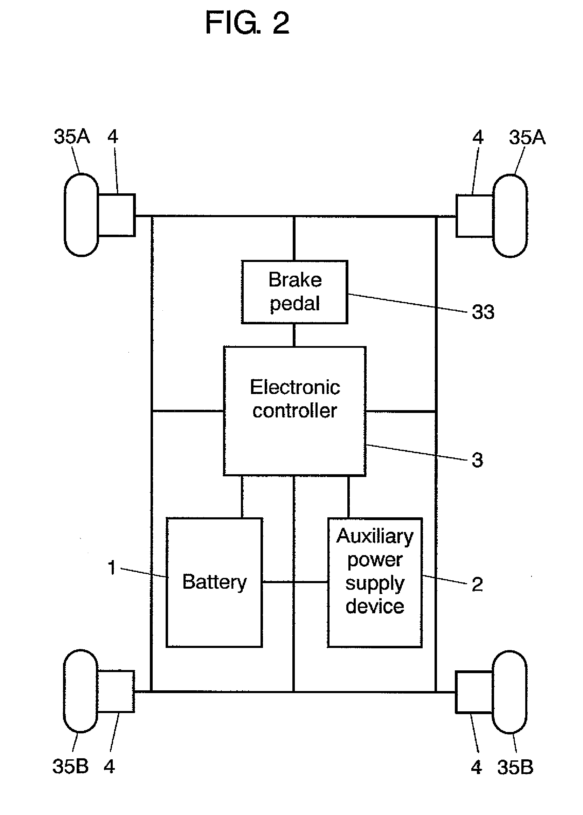

Fig. 2 is a schematic view of a braking system of the automobile shown in Fig. 1. Power is supplied to inside the vehicle from 12-V battery 1. Auxiliary power supply device 2 is a backup for battery 1 when there is any abnormality in battery 1. Electronic controller 3 outputs information for controlling braking of the vehicle. Brake pedal 33 transmits the information for controlling braking of the vehicle to electronic controller 3. Brake 4 is controlled by electronic controller 3 based on the information from brake pedal 33, and applies a brake to at least one of front wheels 35A and rear wheels 35B. Electronic controller 3 is thus a main controller which receives information from at least brake pedal 33, and outputs the information for controlling braking of the vehicle to brake 4.

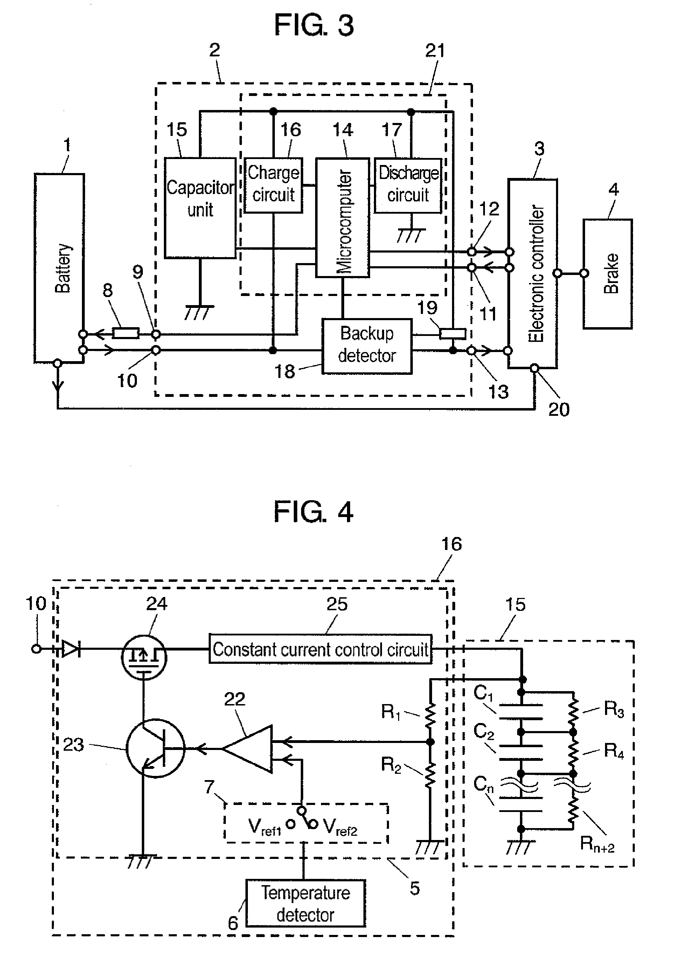

Fig. 3 is a circuit diagram of the auxiliary power supply device for vehicle in the preferred embodiment of the present invention. Battery 1 is connected to ignition generator terminal (hereafter referred to as "IG terminal") 9 provided in auxiliary power supply device 2 via ignition switch 8 for starting and terminating the operation of the vehicle. Battery 1 is also connected to +BC terminal 10 and power supply terminal 20 for supplying power to auxiliary power supply device 2 and electronic controller 3.

Auxiliary power supply device 2 and electronic controller 3 are connected by communication input terminal 11, communication output terminal 12, and output terminal 13. Through communication input terminal 11, electronic controller 3 outputs a signal to auxiliary power supply device 2. Through communication output terminal 12, auxiliary power supply device 2 outputs a signal to electronic controller 3. Through output terminal 13, voltage of battery 1 detected by backup detector 18, which is described later, is output to electronic controller 3. When there is any abnormality in battery 1, auxiliary power supply device 2 outputs its electric charge stored inside auxiliary power supply device 2 to electronic controller 3.

The structure of auxiliary power supply device 2 is described next. Auxiliary power supply device 2 includes capacitor unit 15 as an auxiliary power source for supplying power to brake 4 via electronic controller 3 when any abnormality occurs in battery 1. Capacitor unit 15 typically includes multiple capacitors configured with, for example, electric double layer capacitors that allow rapid charge and discharge. Auxiliary power supply device 2 also includes charge circuit 16 for charging capacitor unit 15, and discharge circuit 17 for discharging capacitor unit 15. Charge circuit 16 and discharge circuit 17 are controlled based on instructions from microcomputer 14.

Auxiliary power supply device 2 further includes backup detector 18 which is a first abnormality detector for detecting voltage output from battery 1. When backup detector 18 detects abnormal voltage, FET switch 19, which is an output controller, switches the discharging operation so as to discharge the electricity from capacitor unit 15 to electronic controller 3 via output terminal 13. Backup detector 18 and FET switch 19 may be either included in auxiliary power supply device 2 or provided separately.

Second abnormality detector 21 for detecting any abnormality in capacitor unit 15 based on charge and discharge behaviors is provided in auxiliary power supply device 2. Second abnormality detector 21 includes microcomputer 14, charge circuit 16, and discharge circuit 17.

The power supply device for vehicle thus includes auxiliary power supply device 2, battery 1, backup detector 18, and FET switch 19; and is built in body 40 for supplying power to brake 4.

Next, the operation of the power supply device for vehicle is described. First, a driver turns on ignition (not illustrated) for starting the operation of vehicle. Then, ignition switch 8 provided between battery 1 and IG terminal 9 is turned on. Consequently, 12-V voltage is supplied from battery 1 to auxiliary power supply device 2 and electronic controller 3. Electronic controller 3 then sends a charge permission signal to auxiliary power supply device 2 via communication input terminal 11 for permitting charging from battery 1 to capacitor unit 15. Microcomputer 14 receives this charge permission signal, and sends it to charge circuit 16.

When charging is permitted, battery 1 starts charging capacitor unit 15 via +BC terminal 10 and charge circuit 16 so as to prepare for supplying electric charge to electronic controller 3 when the voltage of battery 1 lowers or any abnormal state occurs in battery 1.

On the other hand, backup detector 18 detects voltage output from battery 1 via +BC terminal 10, and outputs a detection result to output terminal 13. If voltage output from battery 1 is above a reference value (e.g. 9.5 V), electronic controller 3 determines that voltage of battery 1 and operation of auxiliary power supply device 2 are in the normal state. Electronic controller 3 then makes generator 37 to supply power continuously to auxiliary power supply device 2 via battery 1.

When the driver operates brake pedal 33, electronic controller 3 receives information from brake pedal 33. Based on this information, electronic controller 3 outputs information for controlling braking of the vehicle to brake 4. Brake 4 then operates based on this information output, so as to ensure braking of front wheels 35A or rear wheels 35B. As a result, the brake is applied to the vehicle without fail.

To terminate the operation of vehicle, the driver typically turns off the ignition (not illustrated). Then, ignition switch 8 is turned off, and electronic controller 3 turns on discharge circuit 17 via microcomputer 14. This permits to discharge capacitor unit 15.

Fig. 4 shows a detailed structure of charge circuit 16 and capacitor unit 15 in auxiliary power supply device 2 shown in Fig. 3. Charge circuit 16 includes charge controller 5 and temperature detector 6.

Voltage of capacitor unit 15 is input to IC 22 which configures a constant voltage control circuit via R₁ and R₂. A reference voltage of either V_{ref1} or V_{ref2} of switch 7 is input to IC 22 by the output control of temperature detector 6. Temperature detector 6, typically configured with a thermistor, measures temperature in vicinity of capacitor unit 15.

The output from IC 22 is input to the gate of FET24 via transistor 23. The source of FET 24 is connected to battery 1, and the electric charge of battery 1 is charged to capacitor unit 15 via constant current control circuit 25 by the control of FET 24.

IC 22 monitors the voltage of capacitor unit 15, and compares it with the reference voltage of either V_{ref1} or V_{ref2} so as to control a charging voltage of capacitor unit 15. R₃ to Rₙ₊₂ connected in parallel to C₁ to Cₙ are provided for equalizing the cell voltage configuring capacitor unit 15. R₃ to Rₙ₊₂ also act to consume voltage of each cell for reducing the voltage of capacitor unit 15 when the reference voltage is switched from V_{ref2} to V_{ref1}.

Switch 7, which is the charging voltage controller, utilizes temperature characteristics of temperature detector 6, and inputs a converted reference voltage to IC 22. Charge controller 5 thus changes the charging voltage for charging capacitor unit 15 using the reference voltage. For example, if the detected temperature is at lowest 0 °C and at highest 65 °C, the reference voltage is set to V_{ref1}, and if the detected temperature is at lowest -30 °C and lower than 0 °C, the reference voltage is set to V_{ref2} so as to change the charging voltage for charging capacitor unit 15.

Energy (E) of capacitor unit 15 is expressed by E = CV²/2. More specifically, if capacitance (C) is fixed, energy (E) can be raised as a square function by increasing voltage (V).

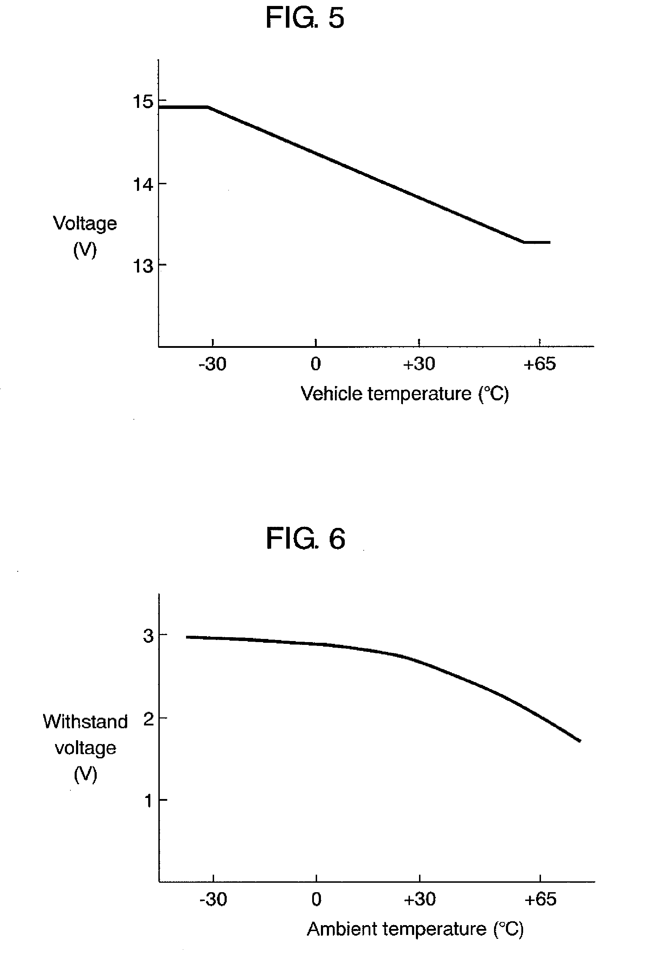

Next, conditions at the power supply side and the power receiving side are described when the charging voltage is increased. Fig. 5 is a temperature characteristics chart related to voltage of generator 37, and Fig. 6 is a withstand voltage characteristics chart of electric double layer capacitor.

As shown in Fig. 5, generator 37, which generates the charging voltage, generates high voltage at lower temperatures. This is because a loss becomes smaller at low temperatures. On the other hand, as shown in Fig. 6, the withstand voltage of the electric double layer capacitor configuring capacitor unit 15 increases at low temperatures. This is also a characteristic of the electric double layer capacitor. Accordingly, generator 37 can supply high voltage and the electric double layer capacitor can withstand this high voltage at low temperatures because of this power supply characteristics at the vehicle side, and the withstand voltage characteristics of the electric double layer capacitor.

Under these conditions, charge circuit 16 shown in Fig. 4 controls the charging voltage of capacitor unit 15 based on a detected temperature of the vehicle. For example, if the detected temperature is at lowest -30 °C and lower than 0 °C, switch 7 is turned to V_{ref1} so as to supply the charging voltage of, for example, 14 V or higher. If the detected temperature is at lowest 0 °C and at highest 65 °C, switch 7 is turned to V_{ref2} so as to supply the charging voltage of, for example, 13.2 V Energy of capacitor unit 15 can be kept almost constant in the range from -30 °C to 65 °C even if the electric double layer capacitor with the temperature characteristics shown in Fig. 7 is used by controlling the charging voltage of capacitor unit 15 in the way described above.

The power supply device for vehicle in this preferred embodiment has auxiliary power supply device 2 which includes capacitor unit 15 composed of the electric double layer capacitor, temperature detector 6, and charge controller 5. When the electric charge is charged to capacitor unit 15, temperature detector 6 measures the temperature nearby capacitor unit 15, and charge controller 5 controls the charging voltage. More specifically, charge controller 5 applies a high voltage for charging capacitor unit 15 when capacitor unit 15 is at a low temperature. This control enables charging of the same electric charge as that at other temperature range even at low temperatures. A disadvantage peculiar to the electric double layer capacitor can thus be solved, and stable energy supply is assured even at low temperatures. As a result, capacitor unit 15 can be designed without considering capacitance reduction at low temperatures. This enables downsizing, weight reduction, and cost reduction at the same time.

An electronically-controlled voltage generator may also be employed as the charging voltage controller, instead of switch 7, so as to successively change the charging voltage of capacitor unit 15 by charge controller 5- However, practically-speaking, the power supply device may be just controlled to increase the voltage applied to capacitor unit 15 by switch 7 when temperature detector 6 detects the temperature lower than a predetermined temperature (e.g. 0 °C). A simple structure of changing the reference voltage in two levels has a sufficient effect.

Capacitor unit 15 is configured by connecting multiple electric double layer capacitors in series. However, they may also be connected in parallel in addition to series connection. Besides, one cell of the electric double layer capacitor with a booster circuit can be used.

### INDUSTIRAL APPLICABILITY

The auxiliary power supply device for vehicle and the power supply device for vehicle of the present invention achieve a smaller and lighter device without permitting reduction of capacitance. Accordingly, the present invention is effectively applicable to an auxiliary power source of automobiles adopting an electronically-controlled brake system.

## Claims

1. An auxiliary power supply device for vehicle, comprising:
a capacitor unit including at least one electric double layer capacitor;
a temperature detector configured to detect a temperature in vicinity of the capacitor unit; and
a charge controller configured to control a charging voltage of the capacitor unit based on a detection result of the temperature detector.

2. The auxiliary power supply device for vehicle according to claim 1, wherein the charge controller increases an applied voltage when a temperature detected by the temperature detector becomes lower than a predetermined temperature.

3. A power supply device for vehicle, comprising:
the auxiliary power supply device for vehicle according to claim 1;
a battery connected to the auxiliary power supply device for vehicle;
a first abnormality detector configured to detect an abnormal voltage of the battery; and
an output controller configured to make the battery to output power from when the battery is in a normal state, and to make the capacitor unit to output power when the battery is in an abnormal state.

4. The power supply device for vehicle according to claim 3,
wherein the vehicle includes a brake and a braking pedal configured to control the brake; and
wherein the power supply device for vehicle further comprises a main controller configured to receive information at least from the brake pedal, and to output information for controlling braking of the vehicle to the brake; and
the capacitor unit and the battery are configured to supply power to the brake via the main controller.

5. The power supply device for vehicle according to claim 4, wherein the main controller is configured to make the battery to charge electricity to the capacitor unit on a starting operation of the vehicle, and make the capacitor unit discharged on a terminating operation of the vehicle.

6. An automobile comprising:
a body;
an engine installed in the body;
a drive wheel driven by the engine, the drive wheel supporting the body;
a steering wheel provided inside the body;
an operated wheel operated by the steering wheel;
a brake configured to brake at least one of the drive wheel and the operated wheel; and
a power supply device for vehicle configured to supply power to the brake, the power supply device being installed in the body, and having:
the auxiliary power supply device for vehicle according to claim 1,
a battery connected to the auxiliary power supply device for vehicle;
a first abnormality detector configured to detect abnormal voltage of the battery; and
an output controller configured to make the battery to output power from when the battery is in a normal state, and to make the capacitor unit to output power when the battery is in an abnormal state.
